Europäisches Patentamt

(19) European Patent Office

Office européen des brevets

(11) Publication number: **0 166 577**
**A2**

# (12) EUROPEAN PATENT APPLICATION

(21) Application number: **85304421.2**

(22) Date of filing: **20.06.85**

(51) Int. Cl.⁴: **G 06 F 7/24**

(30) Priority: **21.06.84 US 623253**

(43) Date of publication of application: **02.01.86**
Bulletin 86/1

(84) Designated Contracting States: **AT BE CH DE FR GB IT LI LU NL SE**

(71) Applicant: **ADVANCED MICRO DEVICES, INC., 901 Thompson Place P.O. Box 3453, Sunnyvale, CA 94088 (US)**

(72) Inventor: **Segal, Moshe, 7950 McClellan Road 2, Cupertino California 95414 (US)**

(74) Representative: **Wright, Hugh Ronald et al, Brookes & Martin High Holborn House 52/54 High Holborn, London WC1V 6SE (GB)**

(54) Information sorting and storage apparatus and method.

(57) Sorting apparatus is disclosed capable of sorting information received by the apparatus and storing the sorted information in sorted order in sequential addresses comprising storage means for storing information in sorted order in sequential addresses, search means via a binary searcher for searching the sequentially stored information and comparing it with incoming information, and means for moving in sequence all stored information following the incoming information to permit insertion or deletion of the incoming information while maintaining the stored information in stored address sequence and sorted order.

ACTORUM AG

- 2 -

This invention relates to information sorting and storage apparatus and method. Preferably this invention relates to a sorting apparatus capable of sorting information by storing information in sorted order in sequential addresses and inserting or deleting information while maintaining the sorted and sequential order.

The sorting of information is an important application of data processing. As much as 25% of the running time of a data processing system may be related to sorting.

Conventionally sorting of data, or data keys, is accomplished using software techniques. While it is known to store unsorted information in the system memory and perform sorting on such data, usually the unsorted information is stored in secondary storage, such as a disc. Data to be inserted or deleted or data to be ordered or indexed is then placed in the system memory and the information in the storage media is searched to find the proper point of insertion or deletion. The whole data is then reordered or an index file is corrected. For sequential files, an entirely new file is then created and stored containing the newly added material (or not containing the deleted material - as the case may be). Alternatively, for random access files, logically adjacent records must be brought into system memory to have their pointers or links changed and then written back into the storage medium.

-3-

In either type of files and most common sorting techniques, far too much time is spent reading records for each insertion or deletion as well as an excessive amount of writing records, particularly for sequential files.

In any type of sorting, a certain increment of time will be spent inputting data to be inserted or deleted, whether such information is entered from a terminal or a secondary storage device, such as a disc. Furthermore, this time is customarily many orders of magnitude slower than execution times for commands in the CPU since some sort of mechanical operation is usually involved, e.g., head movement in a disc storage device.

Applications that employ sorting or can benefit from efficient hardware sorters can be divided into DBMS (Data Base Management Systems) and nonDBMS applications. DBMS applications usually deal with many items and involve a substantial amount of disc access.

Although the delays connected with disc accesses are long in today's disc technologies, sorting many items by conventional software techniques might be even more time consuming, spanning from minutes to hours.

Since disc technology is improving fast, the issue of the processing delays in lengthy operations like sorting becomes more important.

NonDBMS applications usually deal with smaller

-4-

tables of data and involve less disc accesses.
Many operating systems related operations fall into
this category. Usually these applications involve
many system memory accesses to do the sorting or
searching of data, which ends up in time consumption and slower overall operation.

Furthermore, if the incoming data could be inserted
into (or deleted from) a storage buffer having
information stored in proper sorted sequence by
either pushing all subsequent data down one address
(for an insertion) or popping all subsequent data
up one address (for a deletion), sorting time could
be drastically reduced.

Finally, if storage and control sequencing could be
combined with hardware to facilitate fast searching, such as binary searching within the storage
buffer to find the proper insertion or deletion
address, sorting and search times could be yet
further reduced.

Some hardware implementation of sorting has been
attempted in the prior art. For example, Armstrong
U.S. Patent 4,131,947 discloses sorting hardware
which uses a series of memory cells and memory
registers to sort records by comparing pairs of
record keys.

Armstrong U.S. Patent 3,399,383 describes a sorting
system using a series of memories with ascending
capacity. An incoming record is compared with the
records already stored in the memories.

- 5 -

Barsamian US Patent 3 713 107 discloses a sort processor system whereby a search memory is loaded with record keys which are then searched to find the lowest key (for ascending order) and then the next lowest key. As each low key is found, it is stored consecutively in a string list.

However, none of these sorting hardware approaches implements searching for a proper entry, using fast searching, coupled with shifting of already stored data to permit insertions or deletions.

It is therefore an object of the invention to provide a sorting apparatus and method capable of sorting and storing data.

In accordance with the invention, sorting apparatus is provided capable of sorting information received by the apparatus and storing the sorted information in sorted order in sequential addresses comprising storage means for storing information in sorted order in sequential addresses, search means for searching the sequentially stored information and comparing it with incoming information, and means for moving in sequence all stored information following the incoming information to permit insertion or deletion of the incoming information while maintaining the stored information in stored address sequence and sorted order.

- 6 -

## BRIEF DESCRIPTION OF THE DRAWINGS

Figure 1 is a schematic showing the flow of data to and from the apparatus of the invention,

Figure 2 is a schematic layout of major portions of the apparatus of the invention,

Figure 3 is a fragmentary top schematic view of a portion of two of the memory arrays.

-7-

Figure 4 is a schematic view of the pin layout of one sort device.

Figure 5 is a schematic view of the coupling together of several sorting devices.

Figure 6 is a functional block diagram of one of the sorting devices showing several byte cells.

Figure 7 is a schematic block diagram of one byte cell of figure 6.

Figure 8 is a top view of an expansive representation of the bit cell of figure 3 showing the master and slave portions of one bit cell.

Figure 9 is a graph showing the timing of various functions when several sorting devices are used in cascade.

Figure 10 is a flow chart illustrating the steps of the searching portion of the invention.

## DESCRIPTION OF THE PREFERRED EMBODIMENT

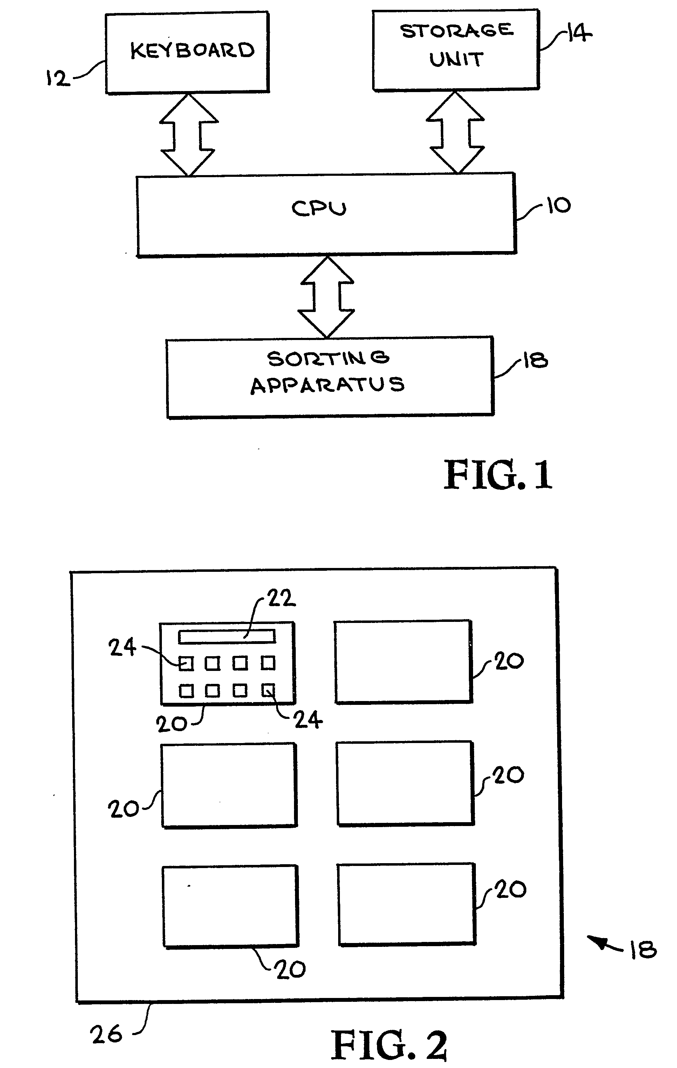

Referring now to figure 1, the sorting apparatus of the invention is shown generally at 18. Sorting apparatus 18 is coupled to a CPU 10 through which data to be sorted is routed to sorting apparatus 18 from external input or storage sources, such as terminal 12 or disc storage unit 14. A record, or a record key plus pointers to where the record resides in the system memory, are passed to sorting apparatus 18 by CPU 10. If the record or record key is the first entry, it is stored in the lowest address, as will be explained in more detail below. If, however, sort apparatus 18 already contains entries, sort apparatus 18 searches the records or keys already stored in its memory cells. When the correct address is located, all subsequent entries are shifted sequentially in memory a sufficient number of addresses to permit either insertion of a new entry or deletion of a present entry, as the case may be. The shift is performed during one clock period similar to a shift in a shift register.

Thus, the sorting apparatus performs read operations, followed by a write function which includes insertion or deletion of the entry by sequentially shifting all subsequent records or keys the number of addresses equalling the length of the entry record or record key.

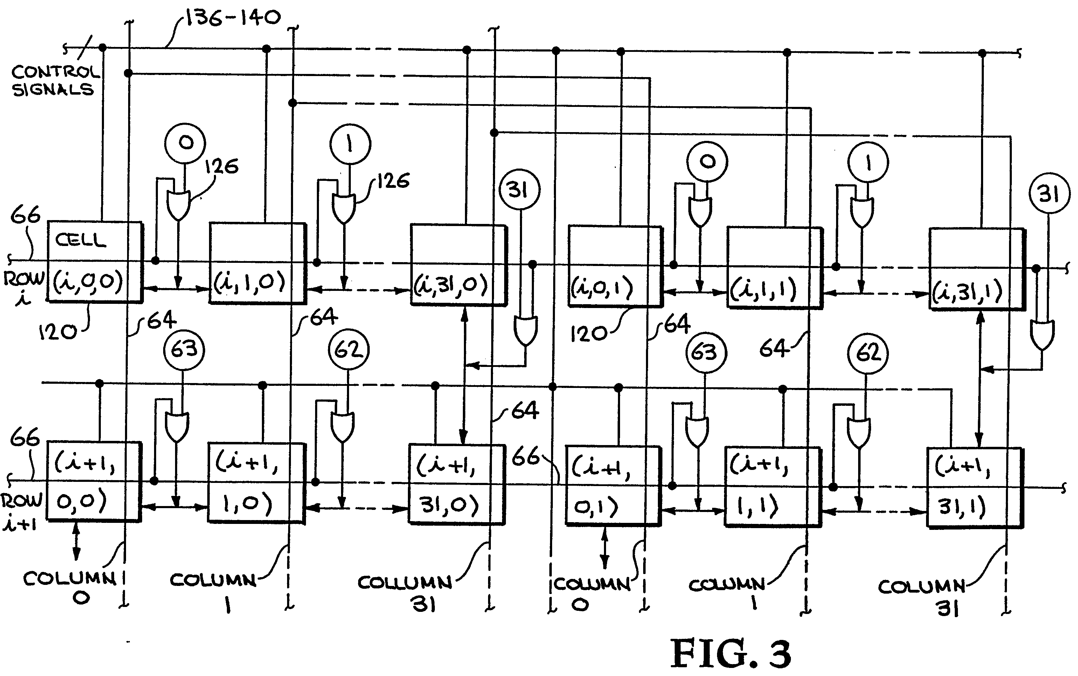

Referring now to figure 2, a preferred embodiment of sorting apparatus 18 is shown in more detail. In the illustrated embodiment, sorting apparatus 18 comprises a circuit board 26 having mounted thereon one or more sort devices 20. Sort device 20, in turn, comprises a control logic unit 22 and one or more memory units 24. In the illustrated embodiment, 8 memory units 24 are shown corresponding to 8 bits for each byte or word of data. Each of the 8 memory units 24 comprises an array of 1024 storage bit cells accessed by 32 row address lines and 32 column address lines, as shown, in part, in figure 3, to provide a total storage of 1024 8 bit bytes or words of storage. Although 8 memory arrays are illustrated, additional memory arrays may be used, if desired, to extend the number of bits in each dataword or byte cell.

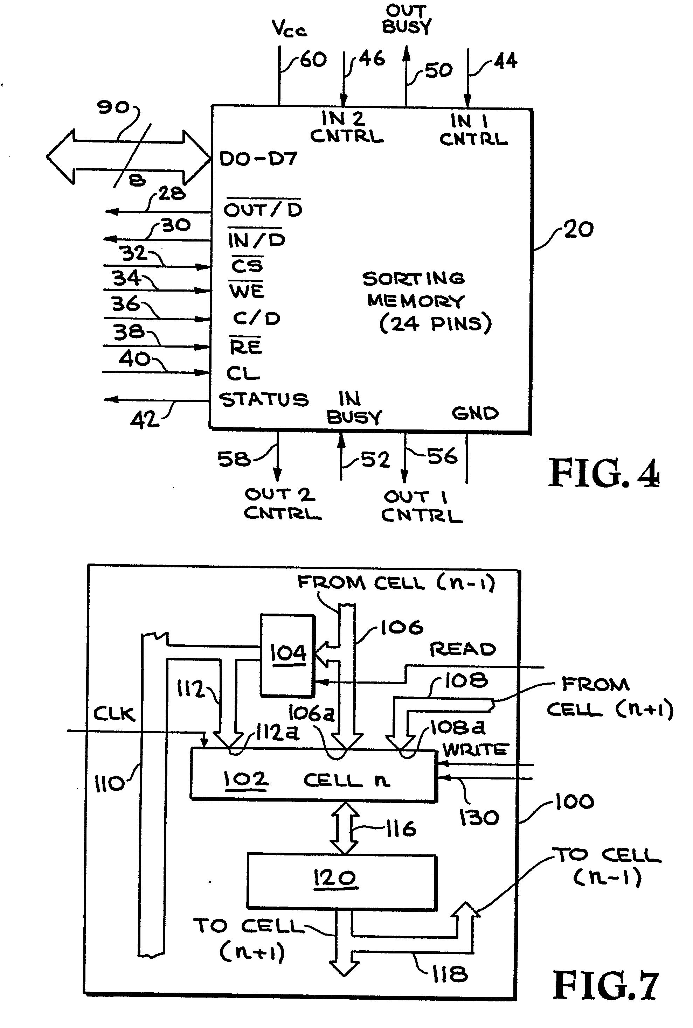

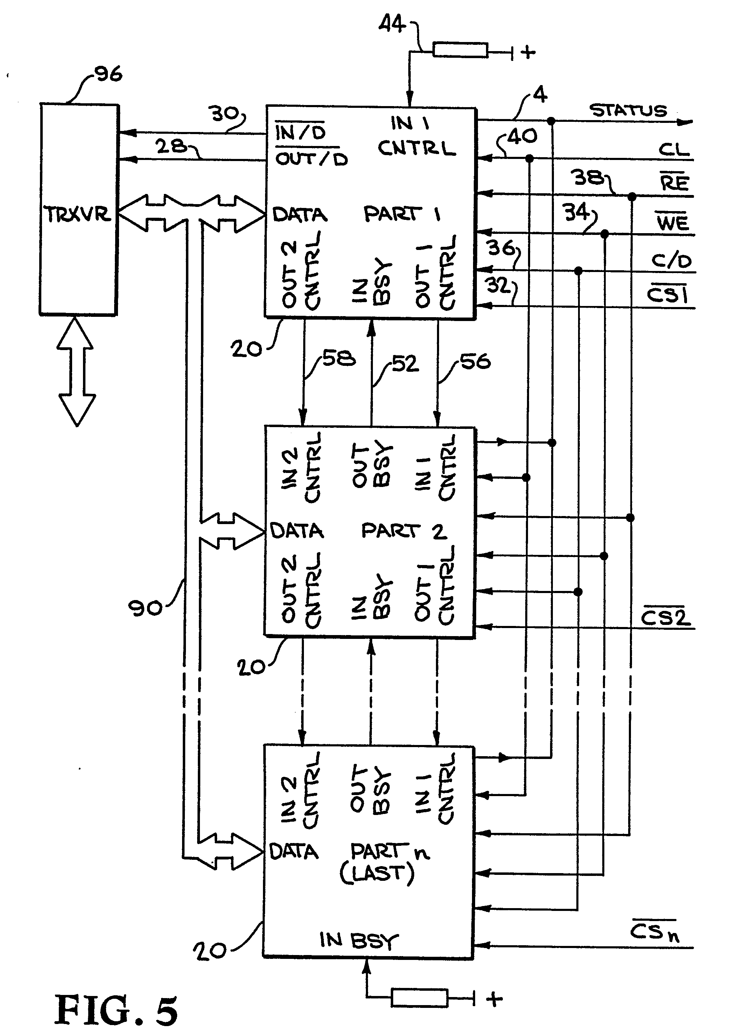

As best seen in figures 4 and 5, each sort device 20 is provided with input and output pins to permit the coupling together of a series of sort devices 20 to permit vertical extension of the sort memory capabilities of sorting apparatus 18. Each of the sort devices 20 is independently capable of searching for a record or record key at the same time that the other sort devices are searching for the same record key and thus the speed of the apparatus is not necessarily hindered by the presence of additional sort devices.

Each sort device 20, as stated above, is capable of operating independently and, thus, is provided with all the necessary pins to function as an individual sorting device. As shown in figure 4, an 8 line bidirectional tristate data bus D0-D7 is used for all system transactions. High on the bus corresponds to a 1 and low to a 0. D0 is the least significant bit and D7 the most significant bit. Sort device 20's control logic tristates these data pins when it is not driving data onto them. When control logic 22 interprets the data as an address pointer, it contains 10 bits created by combining 2 bytes; when it is regular data - only 8 bits are used.

Usually the device gets data bytes to sort and the addresses internally are not referred to. However, to enable the user to access specific predefined addresses in the internal memory array of the device, the device contains an internal address pointer register. It can be accessed by first initiating a "load address pointer" command and then sending two data bytes that contain that address pointer.

$\overline{OUT/D}$ pin 28 and $\overline{IN/D}$ pin 30 are two output pins which are low when active and which control a decoupling transceiver device 96 that decouples the sort devices data bus 90 from the CPU data bus. This is required when more than one sort device is used since they use data bus 90 to exchange data for sort. Then external transceiver 96 is controlled from these pins coming from the first sort device. This is illustrated in figure 5.

$\overline{CS}$ pin 32 is a chip select pin with the input, when active, being low. This pin, when, low enables the control logic to perform the required operations for enabling the external CPU to execute reading and writing from/to the sorting device.

$\overline{WE}$ pin 34 is an input pin which is low for writing data at the predefined address pointer. To access the sorting device 20 and initiate any function, the required function has to be first loaded into an internal command register that resides in control logic 22. It is written when the C/D pin is high (command) by pulsing WE low when the required command byte is on the data bus.

C/D pin 36 is a command/data pin which is high when active. This pin interprets the data as command when it has to be routed to the command register or regular data when data is written into the memory banks 24 of sort device 20.

$\overline{RE}$ pin 38 is an input pin which is low for reading data from the predefined address pointer, and writing it on the data bus.

CL pin 40 is a clock input pin which provides the basic timing clock to sort device 20 to assist it in the serial pushing/popping operations, while Vcc power pin 60 provides +5 volts of power to the device.

Status pin 42 is an output which is high when active and which is used to inform the CPU when the sort is over.

IN1-CNTRL pin 44 and IN2-CNTRL PIN 46 are input control pins which are low when active. IN1-CNTRL pin 44, when asserted low, informs sort device 20 to start a push operation. When IN2-CNTRL pin 46 is asserted low, it informs the device to start a pop operation. Either pin overrides the CS pin. Each pin also contains sort control data, during sort, in conjunction with each other.

Out-Busy pin 50 informs the previous sort device in the vertical chain, that sort device 20 is in the middle of a pushing or a popping operation. IN-BUSY pin 52 is an input pin which, when asserted high, informs sort device 20 that the next sort device in the vertical chain is in the midst of a pushing or a popping operation.

-12-

OUT1-CNTRL pin 56 and OUT2-CNTRL pin 58 are output control pins which are active in the low state. OUT1-CNTRL pin 56, when asserted low, informs the next sort device in the vertical chain that it has to perform a vertical push. OUT2-CNTRL pin 58, when asserted low, informs the next device in the vertical chain that it has to perform a vertical pop. Either pin overrides $\overline{CS}$ in the next sort device. Also during sort, each pin contains sort control data in conjunction with the other.

When using a plurality of sort devices 20, the last device has to be aware of the fact that it is the last, particularly during pushing or popping operations. This is done by connecting IN-BUSY pin 32 in the last device to a pull up resistor. At power up, all of the sort devices 20 issue a low on their OUT-BUSY pin 50. The device that gets a high on its IN-BUSY pin 52 then knows that it is the last device. The first device must also be provided with the proper signal to inform it that it is the first device, particularly for read or search operations. This is accomplished by using a pull up resistor connected to IN1-CNTRL pin 44 on the first device. At power up, all devices issue a low on their OUT1-CNTRL pins 56, so only the first device gets a high on its IN1-CNTRL pin 44 at power up.

It should be noted here, that while additional sorting devices may be added to extend the memory capacity of sorting apparatus 18 to permit the sorting and storing of large files, the sorting apparatus need not, necessarily, be as large as the file to be sorted since this could be unwieldy or expensive for very large files. In such instances, it may be advantageous to use software sorting to initially divide the file to be sorted into chunks or sections which may then be inputted into sorting apparatus 18. For example, using a software sort, such as "Quicksort", a file containing 20K of record keys could be divided into four portions of 5K each if sorting apparatus 18 had a maximum storage capacity for records of 5K. Each of the four portions of the file then would then be sorted independently by sorting apparatus 18 and returned, via the CPU, to the external storage device, and the next portion or chunk of the file would then be sent by the CPU to sorting apparatus 18 to be sorted.

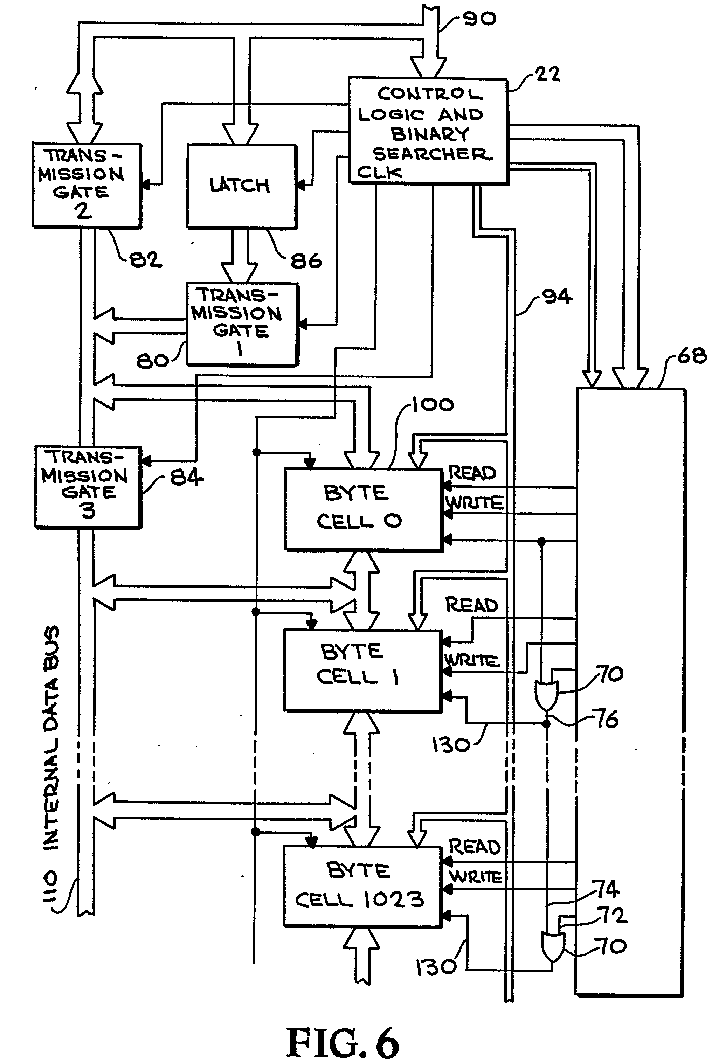

In figure 6, a segment of one of the sort devices 20 is shown comprising the control logic and binary searcher portion 22 and several byte cells. Each byte cell contains 8 bits, each belonging to a different memory array 24. The insertion/deletion or write function of the sorting apparatus is facilitated by the provision of OR gates 70 which are coupled between a decoder 68 and each byte cell except byte cell 0. OR gate 70 has a first input 72 connected to decoder 68 and a second input 74 coupled to the output of the OR gate of the preceding byte cell. The output 76 of OR gate 70 is coupled to the write function for the particular byte cell being addressed through decoder 68. Thus, when the correct address for insertion or deletion is found in the read or search step, as will be explained in more detail below, OR gate 70 for this address is enabled through the decoder,

-14-

and the output then is not only coupled to the byte cell itself but also to one of the inputs of the OR gates for all subsequent byte cells. This, then, results in all byte cells at higher addresses being enabled into write mode by a single enabling signal. Sort device 20 is also provided with a series of transmission gates 80, 82, and 84 and a latch 86 to respectively control the flow of data during reading and writing operations and the shifting of data from one byte cell to another. Thus, all subsequent byte cells may operate as a shift register to move all data simultaneously in pushing and popping operations as will be described in more detail below.

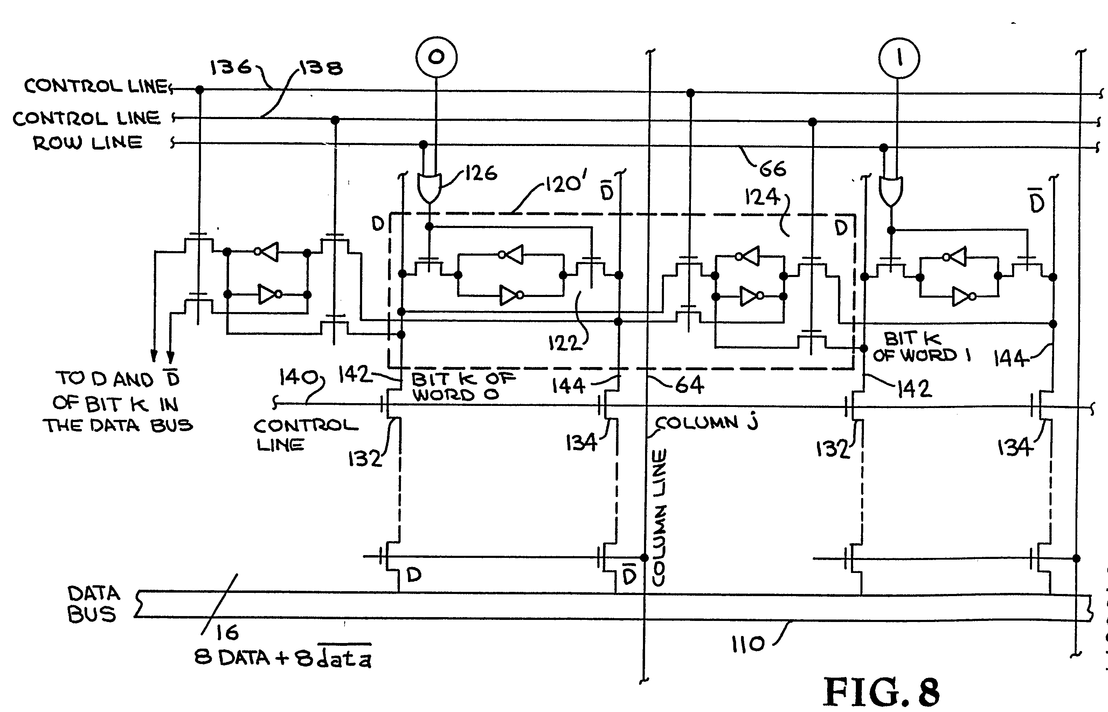

Figures 7 illustrates typical internal architecture which may be used in a single byte cell 100. Cell 100 comprises a multiplexer 102 coupled by data bus 116 to a master-slave unit 120. The internal data bus 110 feeds data into multiplexer 102 via data bus 112. A transmission gate 104 controls the flow of data to the internal data bus 110 from the previous byte cell data bus 106. The third data bus 108 is connected to multiplexer 102 from a subsequent memory cell. Master-slave unit 120, in turn, has a data bus 118 to transfer information to a prior memory cell.

Although figures 6 and 7 show an organization based on 8 bit bytes cells, which is best to explain the functionality, this implementation as an IC device is not suitable since it would contain many multiplexers. An organization of 8 bit cell arrays ( as in figure 2) is more adequate since each such array contains all the bits corresponding to a certain bit position in each byte. Since pushing/popping is done between corresponding bits in adjacent bytes, this organization does not need the multiplexers.

Figure 8 shows one bit cell 120' in one such array, which can correspond to one bit in the master-slave unit 120 shown in figure 7. Figure 3 shows a portion of 2 rows of bit cells in 2 arrays. The subscripts defining each bit cell (as shown in parentheses in each cell in the drawing), respectively, are the row, column, and bit numbers.

These 8 arrays each have 1024 bits which can be accessed by 32 row line and 32 column lines for regular read/write operations as in a regular static memory. However, to enable pushing/popping, some more control lines and an extra OR gate have to be provided for each bit cell as explained below.

Each basic bit cell in figure 7 actually comprises two static memory cells, master memory cell 122 and slave cell unit 124, plus an OR gate 126 which ORs the two signals that can enable access to the cell. The two signals, respectively, are the specific row line signal (when the cell is accessed as a regular static memory device for read/write) and the decoder signal which corresponds to the output of OR gate 70 in figure 6 when the cell is accessed for pushing/popping operations.

Also, to enable the shift operations, D data line

142 and $\overline{D}$ data line 144 which run vertically from cell to cell and are controlled by column lines 64 from decoder 68 have to be broken during a shift. This requires 2 gates, 132 and 134, for each bit cell. Note that control line 140 in figure 8, which breaks D line 142 and $\overline{D}$ line 144 vertically, is coming from control logic 22, as well as control lines 136 and 138 which will be explained. On the other hand, the row lines 66 and the column lines 64 come from address decoder 68. D line 142 and $\overline{D}$ line 144 are decoupled from the internal data bus by the column lines as in regular memory cells.

During a push operation, data stored in master memory cell 122 is shifted to its slave memory cell 124 in 1 half clock pulse and then to the master memory cell of the next higher address cell in the next half clock pulse. This is done by control lines 136 and 138 (figure 7) which are controlled by control logic 22. Control line 136 enables first the movement from the master to its slave. Then control line 138 enables the movement from the slave to the next master.

Conversely, during a pop operation, data stored in master memory cell 122 is shifted to the slave cell of the next lower address cell in 1 half clock pulse and then to its master cell in the next half clock pulse. This is done by activating first control line 138 and then control line 136. This use of master-slave cells permits all data after a particular address to be shifted 1 address in 1 clock pulse.

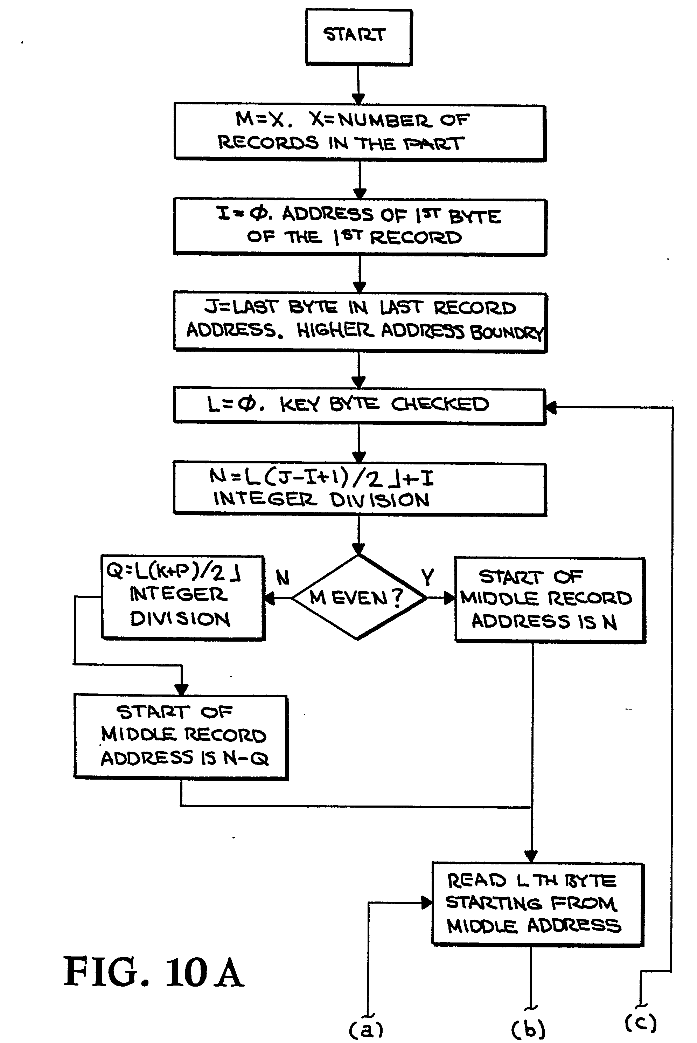

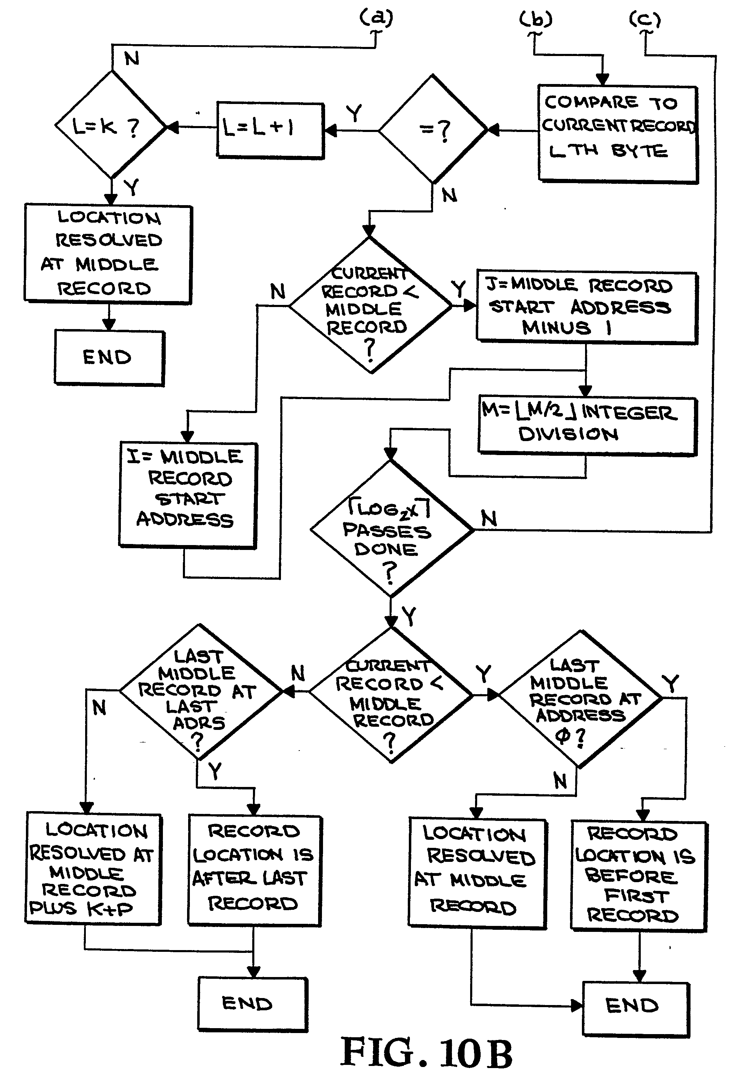

As previously mentioned, each of the sorting devices 20 contains a control logic unit 22. Control
unit 22 includes the binary searcher which may comprise a simple arithmetic unit (ALU) and PLA which
has been designed to carry out the binary search
shown in the flow chart of figure 10.

This binary search comprises a series of read operations to find the correct address for insertion or
deletion of a new record or record key. The first
read is done on the middle of the file, i.e., the
middle record to determine whether the new data
should be inserted or deleted before or after this
location. For the next read, the middle of the
half file selected in the first read is read, and
the stored data continues to be halved until the
correct address is located.

During the binary search, control logic 22 accesses
the memory array for reading by enabling transmission gate 104 to internal data line 110, and into
control logic 22.

Before commencing the search, it is necessary for
each sorting device 20 to store the beginning address of the first record or record key (the low
boundary) and the end address of the last record
stored (the high boundary). The length of each
record or record key and pointers must also be
stored (referred to herein as (k + p) where k
equals the number of bytes in the record key and p
equals the number of bytes in the pointer bytes).
This pointer points to the system memory where the
record resides. M, the number of records (or record keys) stored in the particular sort device, is also tallied.

Preferably, an amount of storage equal to the length of one record key and pointers (k + p) is also set aside in the high end of each memory unit 24 to permit temporary storage of the incoming record key and pointers.

The first record or key entered will be placed in the lowest available address of the first sort device, i.e., a write function without a prior read or search function. For succeeding entries or deletions, the location of the middle record stored within the boundary addresses in each of the sort devices is first ascertained. If the number of stored records is even, the address of the first byte of the first record in the second half of the stored data will be one half of the address of the last byte in the last record minus the address of the first byte of the first record, plus one, e.g., (39 - 0 + 1)/2 = 20. This quantity is denoted N in the flow chart of figure 10.

After resolving the starting address of the middle record, its bytes are checked with the current record, starting with the most significant byte using an 8 bit comparator which forms a part of control logic and binary searcher 22. The comparison is stopped after a resolution is reached, which is usually after the first few bytes are checked. If the current record is higher than the middle record, the process is repeated with the low address of the middle record substituted for the low address boundary used initially. If the current record is lower than the middle record, the address of the first byte of the middle record minus 1 becomes the high address boundary and the first half of the stored records are divided to find the low address of its middle record. This is repeated for $\lceil \log_2(M) \rceil$ times or until the correct address is found. $\lceil \log_2(M) \rceil$ is the maximum number of searches needed to find the correct address where M equals the total number of records stored.

When the number of records is odd, the quantity is first calculated as $\lfloor Q = (k + p)/2 \rfloor$ using integer division. Also N is calculated as before. The starting address of the middle record is N - Q e.g., for 5 records of 10 bytes each, N = (49 - 0 + 1)/2 = 25, Q = 5, and N - Q = 20.

The remaining steps in the flow chart deal with the location of the current record before the first stored record, after the last stored record, or immediately before or after the middle record.

When more than one sort device 20 is used, the search is carried out simultaneously in each device. The devices then inform one another via IN1-CONTROL pin 44, IN2-CONTROL pin 46, OUT1-CONTROL pin 56, AND OUT2-CONTROL pin 58, as previously discussed, whether the key being searched is: (a) located within the device, (b) greater than the last key within the particular sort device, or (c) less than the first key in the device. When a sort device is given a signal by a previous sort device that the address is higher than the last address in the previous sort device, and the device has found the key to be lower than the key in its first address, then the new record key must be inserted in the low address of that sort device, and all subsequent keys must be pushed up.

Following resolution of the address for insertion or deletion of the current record, i. e., the read or search function, the write function is initiated either to insert the record by pushing all subsequent data (k + p) addresses up or to delete the record by popping all subsequent data (k + p) addresses down.

If a new record is to be inserted, push line 130, which is connected to output 76 or OR gate 70, as shown in figure 6, is enabled for all of the byte cells below the address located in the search. Each of the cells with push line 130 enabled clock the content of their master memory cell 122 into their slave memory cell 124. This is done by control logic 22 by activating the proper control line in control bus 94 in figure 6 equivalent to control line 136 in figure 8. One half clock later the slave cells transfer their content to the master cell of the next higher cell address by activating control line 138. This continues for the number of clock cycles equal to the number of bytes in the record key and pointers (k + p).

After all of the record keys and pointers have been shifted up for addresses above the searched address, the new record key and pointers are inserted in a write operation. To accomplish this, control logic 22 reads the first byte of the current record and stores it within control logic 22 and then routes this byte via internal data bus 110 to the first byte address in the memory array where it has to be inserted. Similar processing is done for the remainder of the (k + p) bytes for transferring them, from their temporary locations at the high end of the memory array to where they have to be inserted.

Thus, the records keys and pointers remain in logically sorted order as well as hardware sequential order in sort apparatus 18.

If the record key which was searched for is to be deleted from the sorted file, i.e., the sorted records in sort apparatus 18, push line 130 is again enabled for all cells with addresses above the located address. This time control logic 22 enables input 108a of multiplexer 102 for each cell. All the cells with push line 130 enabled clock the input from the next higher master cell into their slave cell. One half clock later input 108a is disabled, and the slave cell transfers its data into its master cell. This sequence is repeated for the number of bytes in the record key and pointers (k + p) being deleted from sort apparatus 18.

The read/write done during the binary search operation is done internally by control logic 22. If the external CPU needs to execute a read/write relating to a specific address in the sorting

-22-

device the following occurs:

First, to permit reading of a word from byte cell 100, internal data bus 110 is connected to external data bus 90 by enabling transmission gates 82 and 84 and disabling transmission gate 80. Transmission gate 104 within the next byte cell must also be enabled to permit the flow of data from byte cell 100 into data bus 110.

Secondly, to accomplish a write, control logic 22 causes internal data bus 110 to get the content of external data bus 90 by enabling transmission gates 80 and 84 and latch 86. At the same time, control logic 22 disables transmission gate 104 and enables input 112a on the multiplexer 102.

When more than one sorting device is used in cascade, and the sorting function is executed, the devices are filled and participate in the sort sequentially starting with the first device. Thus, records to be sorted are first inserted in the first device and only the first device executes the sort until it gets filled. When the first device is filled and a new record is to be added, the first sorting device initiates a push to the next device and this signals the next device via OUT1 CNTRL pin 56 that it must start participating in the sort. From now on, the first two devices execute the sort until the second device gets filled and initiates a push into the device after it, and so on.

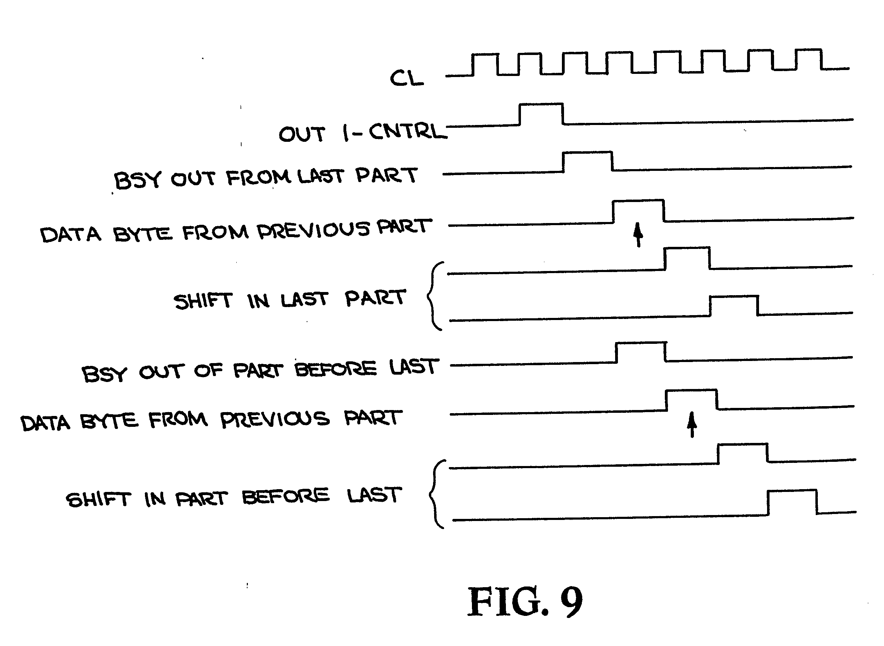

If more than one sorting device is used in cascade, they share data bus 90 to execute a push/pop among

0166577

-23-

them, in cascade.  This is explained further below
and illustrated in the timing diagram of figure 9.

When a push is done, it starts at the device considered last.  The device considered last activates
BSY OUT.  This signals the device before it to read
its last byte internally and emit it to the data
bus.  The next two clock periods are used to execute the push in the last device with the first
clock period used to read the data on the bus.
While the last device pushes, the device before it
sets BSY OUT to the device before itself and expects to get a data byte one clock period later.
So, as seen from figure 9, the sorting devices push
in cascade with each device expecting to receive
its data byte for insertion one clock period after
it emits BSY OUT.

Similar arguments apply to a cascaded pop, only
each device first emits the data byte residing at
its lowest address to the data bus and then pops
the remaining bytes.

Thus, the apparatus provides for searching and
insertion or deletion of records stored in sorted
and sequential order.  In accordance with the invention, this storage of sorted data in sequential
hardware addresses in the memory buffers of sorting
apparatus 18, rather than only logical sequence;
incorporation of the binary search algorithm into
hardware; and the ability to move all sequentially
stored data beyond a given address in a single pop
or push operation per byte results in sorting which
is orders of magnitude faster than conventional

0166577

- 24 -

software driven sorting.

-25-

CLAIMS

1. A sorting apparatus capable of sorting information received by the apparatus and storing the sorted information in sorted order in sequential addresses comprising:

     (a) storage means for storing sorted information in sorted order in sequential addresses;

     (b) search means for searching said sequentially stored information and comparing it with incoming information;

     (c) and means for moving in sequence all stored information following said incoming information in sequence to permit insertion or deletion of said incoming information while maintaining the said stored information in stored address sequence and sorted order.

2. The apparatus of claim one wherein said storage means comprise one or more memory arrays having a series of memory cells having sequential addresses.

3. The apparatus of claim 2 wherein said storage means comprise one or more storage devices, each having blocks of memory cells and said control means fills said one or more of said blocks of memory cells with sorted information in sequential order.

4. The apparatus of claim 3 wherein said control means fills said memory cells with sorted information in sequential order commencing with the lowest address of said memory cells.

5.  The apparatus of claim 4 wherein said memory cells are located in more than one device and one device is sequentially filled by said control means prior to filling of memory cells in any other devices.

6.  The apparatus of claim 2 wherein said search means comprise a binary searcher which searches the sequentially stored sort information to determine the correct address in said memory array for insertion or deletion of information to maintain said information in sorted order and sequentially storage.

7.  The apparatus of claim 6 wherein said control means moves all sequentially stored information beyond said correct address a number of addresses equal to the length of the information to be deleted or inserted to permit insertion or deletion of information while maintaining said sorted information in sorted and sequentially stored order in said memory arrays.

0166577

-27-

8. Sorting and storage apparatus capable of sequentially storing information in sorted order and inserting or deleting information at any point in the sorted order comprising:

(a) means for storing information in sorted and sequential order in said storage apparatus;

(b) means for searching said sorted stored information to find an address for the insertion or deletion of information; and

(c) means for sequentially moving at least a portion of the stored information as a block to permit the insertion or deletion of information in sequential order;

whereby said information is maintained in sorted and sequential order in said storage apparatus after the insertion or deletion of information.

9. A sorting apparatus capable of sorting and sequentially storing information received by the apparatus comprising a plurality of sorting devices coupled together, each of said sorting devices comprising:

(a) storage means for sequentially storing information;

(b) search means for searching stored information and comparing it with incoming information; and

· (c) control means for sequentially moving all stored information following said incoming information to thereby maintain said stored information in sorted order.

10. The apparatus of claim 9 wherein each of said sorting devices contains storage means comprising 1 or more memory arrays.

11. The apparatus of claim 10 wherein said storage device contains 1 memory array for each bit in the data byte stored in said memory arrays.

12. The apparatus of claim 11 wherein each of said memory arrays contains a plurality of memory cells and each of said memory cells comprises a master memory cell and a slave memory cell.

13. The apparatus of claim 12 wherein search means are provided within each device to search for an address of an inputted record or record key.

14. The apparatus of claim 13 wherein said search means comprise binary search means.

15. The apparatus of claim 13 wherein each of said memory cells is associated with enabling means and said enabling means are activated, after said search means have located an address, if the located address is not higher than the address of the cell associated with said enabling means, whereby all cells having addresses as high as the located address are enabled whereby data may be shifted in all of such cells to an adjacent address.

16. The apparatus of claim 15 wherein said data is shifted in said enabled cells by first moving said data from a master cell to an adjacent slave cell and then from said slave cell to the next adjacent master cell.

17. The apparatus of claim 16 wherein a clock pulse is provided to enable movement of data from the master cell of enabled cells simultaneously to an adjacent slave cell and then simultaneously to the next adjacent master cell whereby all stored dated subsequent to the located data is rapidly shifted while maintaining said sequentially stored order.

18. A method of sorting information which comprises:

(a) passing incoming data comprising a record or record key of known length to a sorting apparatus;

(b) comparing said incoming data to data already stored in memory cells in the sorting apparatus to determine a starting address for the insertion or deletion of said incoming data;

(c) sequentially moving all of said stored data having addresses higher than said starting address a number of addresses equal to the length of said incoming data to permit insertion or deletion of said incoming data while maintaining said stored information in sorted order in sequential addresses in said memory cells within said sorting apparatus.

19. The method of claim 18 wherein incoming data to be inserted into said stored sorted information is written into said memory cells commencing at said starting addresses after all data having higher addresses have been shifted upward a sufficient number of addresses to permit insertion of said incoming data.

20. The process of claim 18 wherein the step of comparing said incoming data with stored data is done using a binary searcher contained in said sorting apparatus.

21. The process of claim 18 wherein the step of comparing includes enabling all cells having an address at least as high as said starting address whereby data stored in subsequent address may be moved sequentially.

22. The process of claim 22 wherein each of said memory cells contains a master cell and a slave cell and said sequential moving of all stored data commencing at said starting address includes a first step of moving all such data from the master cell in which it is stored to an adjacent slave cell and a second step of moving all of such data from said slave cells to the next adjacent master cell whereby the movement of all such data while maintaining both sort order and sequential addresses is accelerated.

0166577

KEYBOARD 12

STORAGE UNIT 14

CPU 10

SORTING APPARATUS 18

**FIG. 1**

22
24
20
24
20
20
20
20
20
20
26
18

**FIG. 2**

FIG. 3

**FIG. 4**

**FIG.7**

FIG. 5

0166577

FIG. 6

FIG. 8

6/9

**FIG. 9**

CL

OUT 1-CNTRL

BSY OUT FROM LAST PART

DATA BYTE FROM PREVIOUS PART

SHIFT IN LAST PART

BSY OUT OF PART BEFORE LAST

DATA BYTE FROM PREVIOUS PART

SHIFT IN PART BEFORE LAST

7/9

```
                    ┌─────────────┐
                    │    START    │
                    └──────┬──────┘
                           │
            ┌──────────────▼──────────────┐
            │   M=X.  X=NUMBER OF          │
            │   RECORDS IN THE PART        │
            └──────────────┬──────────────┘
                           │
            ┌──────────────▼──────────────┐
            │   I=Φ. ADDRESS OF 1ST BYTE   │
            │   OF THE 1ST RECORD          │
            └──────────────┬──────────────┘
                           │
            ┌──────────────▼──────────────┐
            │  J=LAST BYTE IN LAST RECORD  │
            │  ADDRESS. HIGHER ADDRESS     │
            │  BOUNDRY                     │
            └──────────────┬──────────────┘
                           │
            ┌──────────────▼──────────────┐
            │  L=Φ.  KEY BYTE CHECKED      │◄───────┐
            └──────────────┬──────────────┘        │
                           │                       │
            ┌──────────────▼──────────────┐        │
            │  N=⌊(J−I+1)/2⌋+I             │        │
            │  INTEGER DIVISION            │        │
            └──────────────┬──────────────┘        │
```

$$N = \lfloor (J-I+1)/2 \rfloor + I$$

$$Q = \lfloor (k+P)/2 \rfloor$$

```
  ┌───────────────┐        ◇              ┌────────────────┐
  │ Q=⌊(k+P)/2⌋   │   N   ╱ M EVEN? ╲  Y  │  START OF      │
  │ INTEGER       │◄─────╱           ╲────►│  MIDDLE RECORD │
  │ DIVISION      │      ╲           ╱     │  ADDRESS IS N  │
  └───────┬───────┘       ╲         ╱      └───────┬────────┘
          │                ◇                       │
          ▼                                        │
  ┌───────────────┐                                │
  │ START OF      │                                │
  │ MIDDLE RECORD │                                │
  │ ADDRESS IS N−Q│                                │
  └───────┬───────┘                                │
          │                                        │
          │         ┌───────────────────┐          │
          └────────►│  READ L TH BYTE   │◄─────────┘
                    │  STARTING FROM    │
                    │  MIDDLE ADDRESS   │
                    └─────────┬─────────┘
```

# FIG. 10 A

(a)          (b)          (c)

**FIG. 10 B**